# EUROPÄISCHE PATENTSCHRIFT

(11) **EP 1 592 817 B1**
(45) Veröffentlichungstag und Bekanntmachung des Hinweises auf die Patenterteilung: **31.05.2006**
(21) Anmeldenummer: 04709165.7
(22) Anmeldetag: 09.02.2004
(51) Int. Cl.: C22C 1/05

(54) **VERFAHREN ZUR HERSTELLUNG EINES HARTMETALLANSATZES**
METHOD FOR PRODUCING A HARD METAL STOCK
PROCEDE DE PRODUCTION D'UNE PREPARATION DE METAL DUR

(30) Priorität: 10.02.2003 AT 6403 U
(43) Veröffentlichungstag der Anmeldung: 09.11.2005
(73) Patentinhaber: CERATIZIT Austria Gesellschaft m.b.H., 6600 Reutte /Tirol (AT)
(72) Erfinder: LACKNER, Andreas, A-6600 Reutte (AT); KNÜNZ, Gerhard, A-6600 Lechaschau (AT); MÜLLER, Christian, A-6600 Wängle (AT); BEISER, Karl, A-6652 Elbigenalp (AT)
(86) Internationale Anmeldenummer: PCT/AT2004/000041
(87) Internationale Veröffentlichungsnummer: WO 2004/070069

(56) Entgegenhaltungen:
- WO-A-02/079531
- WO-A-02/079532
- US-A- 4 354 964
- US-A- 4 478 888
- US-A- 5 922 978

## Beschreibung

Die Erfindung betrifft ein Verfahren zur Herstellung eines Hartmetallansatzes durch Trocknen eines Nassschlammes, welcher durch Nassmahlen der Hartstoff- und Bindemetallanteile auf die gewünschte Korngröße unter Verwendung von Wasser als Flüssigphase, mit oder ohne Anteile eines Presshilfsmittels, hergestellt wird.

Formteile aus Hartmetalllegierungen werden durch Pressen und Sintern eines Hartmetallansatzes hergestellt. Der Hartmetallansatz enthält dabei die in der fertigen Hartmetalllegierung gewünschten Hartstoff- und Bindemetallanteile in feinverteilter Form mit oder ohne Verwendung eines Presshilfsmittels. Vielfach werden zur Herstellung eines derartigen Hartmetallansatzes die feinteiligen Ausgangspulver mit einer mittleren Korngröße im Bereich von wenigen µm und teilweise noch darunter in Granulatform, d.h. in möglichst ideale Kugelform mit einer Granulatgröße von in etwa 140 µm gebracht. Dadurch wird die Rieselfähigkeit des Hartmetallansatzes verbessert, was insbesondere die gleichmäßige Befüllung der Pressmatrizen zur Herstellung komplex geformter Formteile wesentlich vereinfacht.

Die Herstellung des Granulates erfolgt durch Sprühtrocknung des gewünschten Hartmetallansatzes in einer Sprühtrocknungsanlage. Ein derartiges Verfahren unter Verwendung von Wasser als Flüssigphase ist beispielsweise im österreichischen Gebrauchsmuster AT GM 4.929 beschrieben.
Nachteilig bei einem derartigen Verfahren ist, dass es relativ kostenaufwendig ist. Für viele Formverfahren zur Weiterverarbeitung eines Hartmetallansatzes ist eine gute Rieselfähigkeit des Hartmetallansatzes nicht unbedingt notwendig. Dazu gehören beispielsweise die Herstellung einfacher Formteile durch Schlauchpressen oder Strangpressen, aber auch die Herstellung komplexer Kleinformteile durch Pulverspritzgießen.

Wichtig ist, dass bei allen Verfahren zur Herstellung eines Hartmetallansatzes eine maximale Restfeuchte im Bereich von < 0,25 Gew.% erreicht wird und dass der Sauerstoffgehalt im Ansatz einen Wert von 1,2 Gew.% nicht übersteigt.

Die Aufgabe der vorliegenden Erfindung ist es daher, bei Hartmetallformteilen zu deren Herstellung eine gute Rieselfähigkeit des Hartmetallansatzes nicht erforderlich ist, ein Verfahren zur Herstellung des Hartmetallansatzes zur Verfügung zu stellen, das gegenüber bisher bekannten Verfahren deutlich kostengünstiger ist.

Erfindungsgemäß wird dies dadurch erreicht, dass der Nassschlamm mit einem Feststoffgehalt von 75 Gew.% bis 95 Gew.% und einer Schichtdicke von 0,2 mm bis 2 mm auf ein bewegtes Trägerband aufgebracht wird und im Zuge des Durchlaufens einer Trocknungszone innerhalb eines Gesamtzeitraumes von 1 Minute bis 7 Minuten auf eine Maximaltemperatur innerhalb eines Bereiches von > 100°C bis 150°C gebracht wird, wobei der Zeitraum über den der Nassschlamm auf über 100°C erhitzt wird innerhalb eines Bereiches von 15 Sekunden bis 2 Minuten liegt und dass der derart getrocknete Hartmetallansatz auf Raumtemperatur abgekühlt und nötigenfalls zerkleinert wird.

Auf diese Weise wird besonders kostengünstig die Herstellung eines Hartmetallansatzes unter Luft und bei Normaldruckbedingungen ermöglicht, der durch einfache Formgebungsverfahren, wie beispielsweise Schlauchpressen oder Extrudieren bzw. Strangpressen, gut weiterverarbeitbar ist. Zur Weiterverarbeitung des Hartmetallansatzes, insbesondere durch Strangpressen, kann es sinnvoll sein, dem Nassschlamm vor dem Trocknen ein Presshilfsmittel zuzumischen. Handelt es sich um ein wasserunlösliches Presshilfsmittel auf Wachsbasis, wie beispielsweise Paraffin, wird es dem Nassschlamm in Form einer Emulsion, welche mit Hilfe eines Emulgators unter Zugabe von Wasser hergestellt wird, zugemischt.

Durch das erfindungsgemäße Verfahren können aufgrund der sorgfältigen Abstimmung von Feststoffgehalt des Nassschlammes, Schichtdicke, Trocknungszeitraum und Maximaltemperatur während des Trocknungsvorganges überraschenderweise trotz Verwendung von Wasser als Flüssigphase und trotz der Trocknung an Luft bei erhöhten Temperaturen Hartmetallansätze mit äußerst geringem Sauerstoffanteil hergestellt werden. Der Sauerstoffanteil liegt teilweise sogar niedriger als bei Hartmetallansätzen, die nach dem Stand der Technik hergestellt werden, bei denen der Nassschlamm unter Verwendung von organischen Lösungsmitteln wie Aceton aufbereitet wird und die anschließend im Vakuum getrocknet werden. Die maximale Trocknungstemperatur und die Zeitdauer für die Trocknung werden auf die Schichtdicke des aufgebrachten Nassschlammes abgestimmt. Je größer die Schichtdicke, desto höher liegt die maximale Trocknungstemperatur und desto länger ist die erforderliche Trocknungszeit.
Zur Herstellung von Hartmetallansätzen mit sehr feinkörnigen Hartstoffpulvern, die deutlich längere Mahlzeiten erfordern, ist es von Vorteil, dem Wasser vor dem Mahlen zur Herstellung des Nassschlammes ein Antioxidationsmittel, beispielsweise auf Basis von Aminoverbindungen, z.B. Aminoxethylat oder Resorcin zuzugeben, wodurch auch bei derartig oxidationsempfindlichen Hartmetallansätzen ein zu hoher Sauerstoffgehalt im getrockneten Ansatz ausgeschlossen wird.

Besonders vorteilhaft arbeitet das erfindungsgemäße Verfahren dann, wenn der Nassschlamm mit einer Schichtdicke von 0,5 mm bis 1 mm auf das Trägerband aufgebracht wird, denn dann kann der Gesamtzeitraum zum Durchlaufen der Trocknungszone auf 1,5 Minuten bis 6 Minuten verkürzt werden und der Zeitraum über den der Nassschlamm auf über 100°C erhitzt wird, kann auf einen Bereich von 30 Sekunden bis 60 Sekunden eingeschränkt werden. Dadurch wird die Sauerstoffaufnahme des Hartmetallansatzes möglichst gering gehalten.

Besonders günstig ist es, den Nassschlamm zunächst durch Heißluft und dann zusätzlich durch Strahlungswärme auf die gewünschte Temperatur zu bringen, wodurch eine besonders rasche Entfeuchtung des Nassschlammes erreicht wird.
Die Strahlungswärme wird dabei vorteilhafterweise durch Infrarotstrahler erzeugt.

Im Folgenden wird die Erfindung anhand von Herstellungsbeispielen und anhand einer Zeichnung näher erläutert.

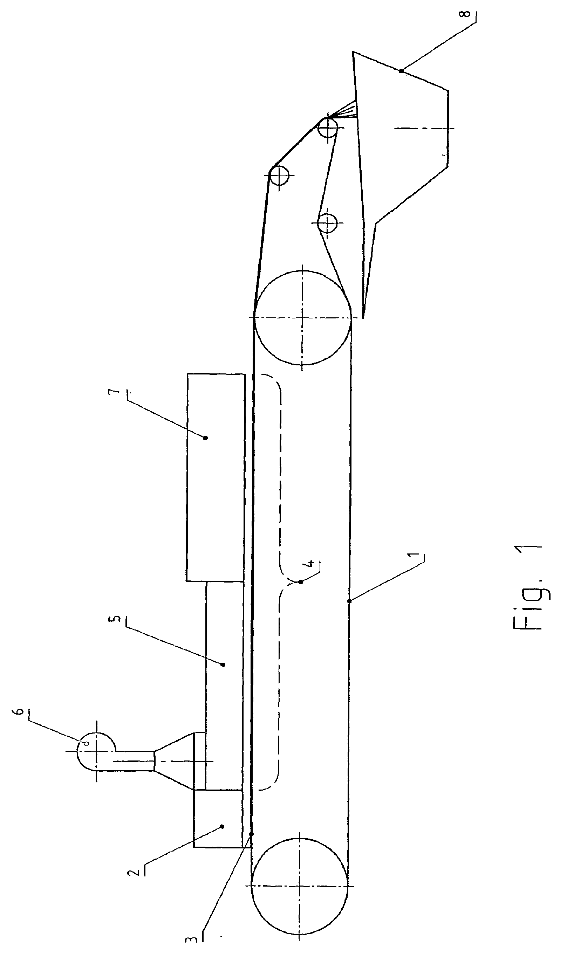

- Figur 1: zeigt das prinzipielle Schaubild einer Bandtrocknungsanlage zur Durchführung des erfindungsgemäßen Herstellungsverfahrens

### Beispiel 1

Zur Herstellung eines Hartmetallansatzes, bestehend aus 6 Gew.% Kobalt, 0,4 Gew.% Vanadiumkarbid, Rest Wolframkarbid, wurden 36 kg Kobaltpulver mit einer mittleren Korngröße nach Fisher von etwa 0,6 µm und einem Sauerstoffgehalt von 0,56 Gew.%, 2,4 kg Vanadiumkarbidpulver mit einer mittleren Korngröße nach Fisher von etwa 1,2 µm und einem Sauerstoffgehalt von 0,25 Gew.% sowie 563,5 kg Wolframkarbidpulver mit einer BET-Oberfläche von 1,78 m²/g was einer mittleren Korngröße nach Fisher von etwa 0,6 µm entspricht und einem Sauerstoffgehalt von 0,28 Gew.% mit 100 I Wasser in einem Attritor 5 Stunden lang gemahlen.
Als Mahlkörper wurden 2.000 kg Hartmetallkugeln mit 9 mm Durchmesser verwendet. Die Attritordrehzahl betrug 78 U/min, die Umpumpleistung des Nassschlammes 1.000 I/Stunde. Die Temperatur des Nassschlammes während der Mahlung wurde konstant auf etwa 40°C gehalten. Der fertig gemahlene Nassschlamm hatte eine Viskosität von 4.000 mPas bei einer Schergeschwindigkeit von 5,18 [1/s].
Zum Trocknen des derart hergestellten Nassschlammes wurde eine in Luft und unter Normaldruck arbeitende Bandtrocknungsanlage nach Figur 1 verwendet. Die Bandtrocknungsanlage nach Figur 1 besteht aus einem 3 m langen, umlaufenden Förderband -1-. Am Anfang des Förderbandes -1- ist eine Aufgabevorrichtung -2- zur Aufbringung des Nassschlammes -3- in unterschiedlichen Schichtstärken auf das Förderband -1- vorgesehen. Anschließend daran befindet sich eine Trocknungszone -4-. Im Zuge des Durchlaufens dieser Trocknungszone -4- wird der schichtförmig aufgebrachte Nassschlamm -3- in einer ersten Durchlaufzone -5- über ein Heißluftgebläse -6-erwärmt.

In einer darauffolgenden zweiten Durchlaufzone -7- wird der vorgetrocknete Nassschlamm mittels Infrarotstrahlern auf die gewünschte Maximaltemperatur innerhalb eines Bereiches von > 100°C und 150°C gebracht.
Am endseitigen Wendepunkt des Förderbandes -1- fällt der getrocknete Hartmetallansatz in einen Auffangbehälter -8-.
Im vorliegenden Herstellungsbeispiel wurde die Bandtrocknungsanlage mit einer Bandgeschwindigkeit von 1 m/min betrieben und der Nassschlamm -3- mit einer Dicke von 0,9 mm auf das Förderband -1- aufgebracht. Die Gesamtdurchlaufzeit durch die Trocknungszone -4- betrug 3 Minuten mit dem folgenden Temperaturverlauf:

| | |
|---|---|
| nach 20 Sekunden: | 40°C |
| nach 52 Sekunden: | 50°C |
| nach 84 Sekunden: | 60°C. |
| nach 150 Sekunden: | 95°C |
| nach 165 Sekunden: | 102°C |
| nach 180 Sekunden: | 110°C. |

Schon beim Durchlaufen der ersten Durchlaufzone -5- wurde der aufgebrachte Nassschlamm -3- durch das Heißluftgebläse -6- auf eine Temperatur von etwa 60°C gebracht, wodurch der Großteil des Wassers verdunstet wurde. Dadurch konnte der Zeitabschnitt der zweiten Durchlaufzone -7- in welchem der Nassschlamm eine Temperatur von mehr als 100°C aufwies, auf etwa 15 Sekunden beschränkt werden um die notwendige, maximal zulässige Restfeuchte des getrockneten Hartmetallansatzes zu erreichen.
Anschließend wurde der getrocknete Hartmetallansatz innerhalb von 20 Sekunden auf Raumtemperatur abgekühlt. Der Sauerstoffgehalt des derart getrockneten Hartmetallansatzes lag bei 0,53 Gew.% und die Restfeuchte bei 0,13 Gew.%.
Der getrocknete Hartmetallansatz wurde in einer Hammermühle auf eine Teilchengröße von etwa 0,4 mm aufgebrochen, standardmäßig mit einem Plastifizierer versetzt und zu einem Hartmetallstab mit 16 mm Durchmesser extrudiert.
Dieser wurde danach bei 1.410°C 80 Minuten lang gesintert und anschließend bei 70 bar nachverdichtet.

Die metallurgische Beurteilung ergab eine ausgezeichnete Hartmetallqualität mit folgenden Eigenschaften:

| | |
|---|---|
| Dichte: | 14,83 g/cm³ |
| Härte HV30: | 2.035 daN/mm² |
| magnetische Sättigung: | 114 x 10⁻³T m³/kg |
| Koerzitivkraft: | 485 Oe. |

Für Vergleichszwecke wurden zwei weitere Hartmetallansätze gleicher Zusammensetzung wie in Beispiel 1 hergestellt. In Beispiel 2 wurde der Hartmetallansatz durch Sprühtrocknen und im Beispiel 3 durch Vakuumtrocknen mit organischem Lösemittel hergestellt. Die aus diesen Hartmetallansätzen hergestellten Hartmetalllegierungen wurden dann miteinander verglichen.

### Beispiel 2

Zur Herstellung dieses Hartmetallansatzes wurden die gleichen Rohstoffe im gleichen Verhältnis und in der gleichen Einwaage wie in Beispiel 1 mit 160 l Wasser unter sonst gleichen Bedingungen in einem Attritor gemahlen.
Zum Trocknen des derart hergestellten Nassschlammes wurde ein Sprühturm mit einem zylindrischen Abschnitt mit einer Höhe von 6 m und einem Durchmesser von 4 m verwendet. Der Sprühturm war auf eine Arbeitsweise im Gegenstrom nach dem Fontänenprinzip ausgelegt.
Als Gas zum Trocknen des Nassschlammes wurde Luft verwendet, die dem Sprühturm mit 4.000 m³/Stunde zugeführt wurde. Der Nassschlamm wurde dem Sprühturm über eine Sprühlanze mit einer Einstoffdüse mit einer Austrittsöffnung von 1,12 mm Durchmesser mit einem Druck von 15 bar zugeführt. Die Luftaustrittstemperatur wurde auf einen konstanten Wert von 88°C eingestellt, was unter den gegebenen Verhältnissen durch eine Lufteingangstemperatur von 145°C erreicht wurde.
Das so erzeugte, sprühgetrocknete Hartmetallgranulat mit einer mittleren Korngröße von 125 µm hatte einen Sauerstoffgehalt von 0,52 Gew.% und eine Feuchte von 0,15 Gew.%.

Das derart herstellte Hartmetallgranulat wurde standardmäßig mit einem Plastifizierer versetzt und zu einem Hartmetallstab mit 16 mm Durchmesser extrudiert.
Dieser wurde danach bei 1.410°C 80 Minuten lang gesintert und anschließend bei 70 bar nachverdichtet.
Die metallurgische Beurteilung ergab eine Hartmetallqualität mit folgenden Eigenschaften:

| | |
|---|---|
| Dichte: | 14,85 g/cm³ |
| Härte HV30: | 2.030 daN/mm² |
| magnetische Sättigung: | 112 x 10⁻³T m³/kg |
| Koerzitivkraft: | 491 Oe. |

### Beispiel 3

Zur Herstellung dieses Hartmetallansatzes wurden die gleichen Rohstoffe im gleichen Verhältnis und in der gleichen Einwaage wie in Beispiel 1 in einem mit 135 I Aceton gefüllten Attritor 8 Stunden lang gemahlen.
Die Temperatur des Acetonpulvergemisches während der Mahlung wurde konstant auf etwa 35°C gehalten.
Die fertig gemahlene Suspension hatte eine Viskosität von < 200 mPa bei einer Schergeschwindigkeit von 5,18 [1/s].
Zum Trocknen dieser derart hergestellten Hartmetallsuspension wurde ein Vakuumtrockner herkömmlicher Bauart verwendet.
Dabei wurde in einem Doppelmantel die Wärme über Heißwasser zugeführt. Außerdem wurde die Suspension mit Vakuum beaufschlagt, so dass das Aceton verdampfte. Zusätzlich war dieser Vakuumtrockner mit einem langsam drehenden Rührwerk ausgestattet.
Nach 10 Stunden Trocknungsdauer hatte der so hergestellte Hartmetallansatz einen Sauerstoffgehalt von 0,48 Gew.%. Der derart hergestellte Hartmetallansatz wurde durch ein Sieb gepresst, dann standardmäßig mit einem Plastifizierer versetzt und zu einem Hartmetallstab mit 16 mm Durchmesser extrudiert. Dieser wurde danach bei 1.400°C 80 Minuten lang gesintert und anschließend bei 70 bar nachverdichtet.

Die metallurgische Beurteilung ergab eine Hartmetallqualität mit folgenden Eigenschaften:

| | |
|---|---|
| Dichte: | 14,83 g/cm³ |
| Härte HV30: | 2.032 daN/mm² |
| magnetische Sättigung: | 113 x 10⁻³T m³/kg |
| Koerzitivkraft: | 488 Oe. |

## Patentansprüche

1. Verfahren zur Herstellung eines Hartmetallansatzes durch Trocknen eines Nassschlammes, welcher durch Nassmahlen der Hartstoff- und Bindemetallanteile auf die gewünschte Korngröße unter Verwendung von Wasser als Flüssigphase, mit oder ohne Anteile eines Presshilfsmittels, hergestellt wird,
**dadurch gekennzeichnet,**
**dass** der Nassschlamm (3) mit einem Feststoffgehalt von 75 Gew.% bis 95 Gew.% und einer Schichtdicke von 0,2 mm bis 2 mm auf ein bewegtes Trägerband (1) aufgebracht wird und im Zuge des Durchlaufens einer Trocknungszone (4) innerhalb eines Gesamtzeitraumes von 1 Minute bis 7 Minuten auf eine Maximaltemperatur innerhalb eines Bereiches von > 100°C bis 150°C gebracht wird, wobei der Zeitraum über den der Nassschlamm auf über 100°C erhitzt wird innerhalb eines Bereiches von 15 Sekunden bis 2 Minuten liegt und dass der derart getrocknete Hartmetallansatz auf Raumtemperatur abgekühlt und nötigenfalls zerkleinert wird.

2. Verfahren zur Herstellung eines Hartmetallansatzes nach Anspruch 1, **dadurch gekennzeichnet, dass** der Nassschlamm mit einer Schichtdicke von 0,5 mm bis 1,0 mm aufgebracht wird.

3. Verfahren zur Herstellung eines Hartmetallansatzes nach Anspruch 2, **dadurch gekennzeichnet, dass** die Trocknungszone (4) innerhalb eines Gesamtzeitraumes von 1,5 Minuten bis 6 Minuten durchlaufen wird und die Maximattemperatur 120°C beträgt, wobei der Zeitraum über den der Nassschlamm auf über 100°C erhitzt wird innerhalb eines Bereiches von 30 Sekunden bis 60 Sekunden liegt.

4. Verfahren zur Herstellung eines Hartmetallansatzes nach einem der Ansprüche 1 bis 3, **dadurch gekennzeichnet, dass** der Nassschlamm zunächst durch Heißluft und dann durch zusätzliche Strahlungswärme auf die gewünschte Temperatur gebracht wird.

5. Verfahren zur Herstellung eines Hartmetallansatzes nach Anspruch 4, **dadurch gekennzeichnet, dass** die Strahlungswärme durch Infrarotstrahler erzeugt wird.

## Claims

1. A process for producing a hard-metal feedstock by drying a wet sludge that is produced by wet-grinding the hard-material and binding-metal portions to the desired grain size using water as liquid phase, with or without portions of a pressing aid,
**characterised in that**
the wet sludge (3) is applied with a solids content from 75 wt.% to 95 wt.% and in a layer thickness from 0.2 mm to 2 mm onto a moving carrier belt (1) and is brought to a maximum temperature within a range from > 100 °C to 150 °C in the course of passing through a drying-zone (4) within a total period from 1 minute to 7 minutes, the period over which the wet sludge is heated to over 100 °C lying within a range from 15 seconds to 2 minutes, and **in that** the hard-metal feedstock that has been dried in such a manner is cooled to room temperature and, if necessary, comminuted.

2. Process for producing a hard-metal feedstock according to Claim 1, **characterised in that** the wet sludge is applied in a layer thickness from 0.5 mm to 1.0 mm.

3. Process for producing a hard-metal feedstock according to Claim 2, **characterised in that** the drying-zone (4) is passed through within a total period from 1.5 minutes to 6 minutes and the maximum temperature amounts to 120 °C, the period over which the wet sludge is heated to over 100 °C lying within a range from 30 seconds to 60 seconds.

4. Process for producing a hard-metal feedstock according to one of Claims 1 to 3, **characterised in that** the wet sludge is brought to the desired temperature firstly by means of hot air and then by means of additional radiant heat.

5. Process for producing a hard-metal feedstock according to Claim 4, **characterised in that** the radiant heat is generated by infrared emitters.

## Revendications

1. Procédé de production d'une préparation de métal dur par séchage d'une barbotine humide, qui est produite par broyage humide des ingrédients de métal dur et de métaux liants à la granulométrie souhaitée en utilisant de l'eau comme phase fluide, avec ou sans adjuvants de compression,
**caractérisé en ce que**
la barbotine humide (3) à teneur en matières solides de 75% en poids à 95% en poids est appliquée sur une épaisseur de couche de 0,2 mm à 2 mm sur une bande porteuse (1) en déplacement et **en ce qu'**elle est amenée, lorsqu'elle parcourt une zone de séchage (4), à une température maximale dans la plage de > 100°C à 150°C à l'intérieur d'un laps de temps de 1 minute à 7 minutes, le laps de temps pendant lequel la barbotine humide est amenée à une température supérieure à 100°C étant dans une plage de 15 secondes à 2 minutes, et **en ce que** la préparation de métal dur séchée de cette manière est refroidie à température ambiante et est fractionnée si nécessaire.

2. Procédé de production d'une préparation de métal dur selon la revendication 1, **caractérisé en ce que** la barbotine humide est appliquée sur une épaisseur de couche de 0,5 mm à 1,0 mm.

3. Procédé de production d'une préparation de métal dur selon la revendication 2, **caractérisé en ce que** la zone de séchage (4) est parcourue à l'intérieur d'un laps de temps global de 1,5 minutes à 6 minutes et que la température maximale s'élève à 120°C, le laps de temps au cours duquel la barbotine humide est amenée à une température supérieure à 100°C étant compris à l'intérieur d'une plage de 30 secondes à 60 secondes.

4. Procédé de production d'une préparation de métal dur selon l'une quelconque des revendications 1 à 3, **caractérisé en ce que** la barbotine humide est amenée à la température souhaitée en étant soumise d'abord à un flux d'air chaud, et ensuite à une chaleur rayonnante additionnelle.

5. Procédé de production d'une préparation de métal dur selon la revendication 4, **caractérisé en ce que** la chaleur rayonnante est engendrée par rayonnement par infrarouge.
